Europäisches Patentamt

European Patent Office

Office européen des brevets

(19)

(11) Veröffentlichungsnummer: **0 377 792**
**A1**

## (12) EUROPÄISCHE PATENTANMELDUNG

(21) Anmeldenummer: **89117926.9**

(22) Anmeldetag: **28.09.89**

(51) Int. Cl.5: **G01N 27/16**

(30) Priorität: **27.12.88 DE 3844023**

(43) Veröffentlichungstag der Anmeldung:
**18.07.90 Patentblatt 90/29**

(84) Benannte Vertragsstaaten:
**AT CH DE FR GB IT LI NL**

(71) Anmelder: **Hartmann & Braun**
**Aktiengesellschaft**
**Gräfstrasse 97**
**D-6000 Frankfurt am Main 90(DE)**

(72) Erfinder: **Horn, Bertold, Dr.**
**Lilienweg 15**
**D-6382 Friedrichsdorf(DE)**
Erfinder: **Liedtke, Thomas**
**Hügelstrasse 7**
**D-6370 Oberursel(DE)**
Erfinder: **Moede, Michael**
**Karl-Kotzenberg-Strasse 9**
**D-6000 Frankfurt 50(DE)**

(54) **Sensor zur Bestimmung der Gaskonzentration in einem Gasgemisch durch Messung der Wärmetönung.**

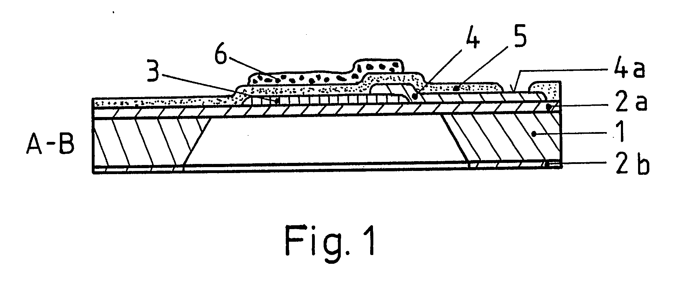

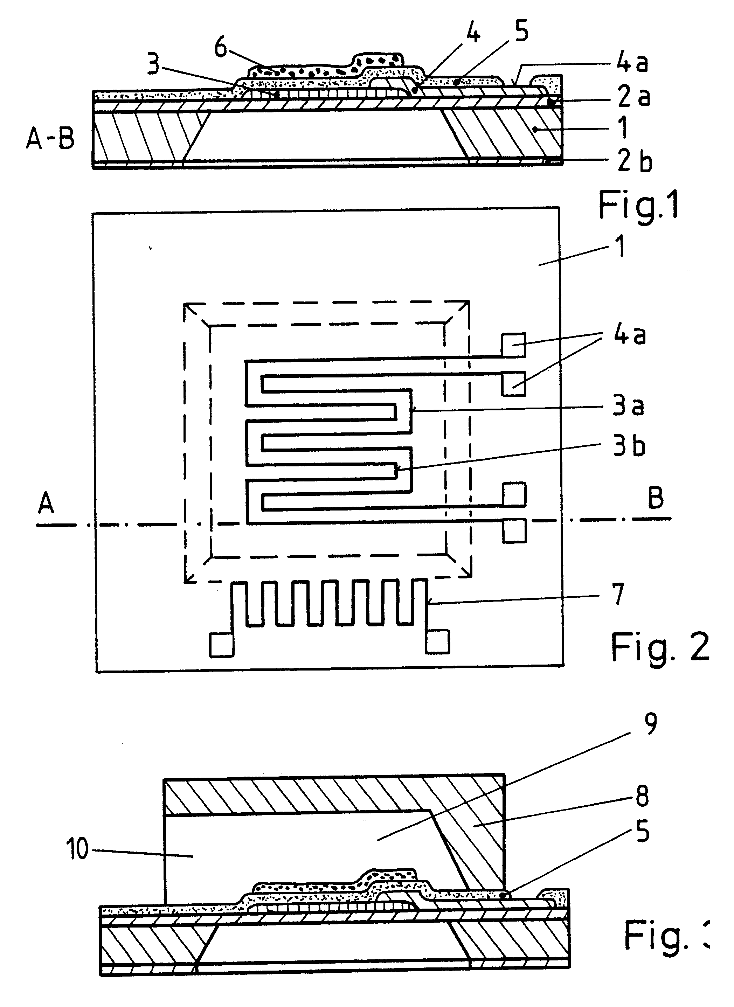

(57) Die Beschreibung betrifft einen Sensor zur Bestimmung der Gaskonzentration in einem Gasgemisch durch Messung der Wärmetönung bei der Oxydation brennbarer Gase. Der Sensor besteht aus Dünnfilmwiderständen (3a, 3b), die auf einer elektrisch und thermisch isolierenden Schicht (2a) aufgetragen sind. Eine Trägerplatte (1) aus Silizium ist im Bereich der Dünnfilmwiderstände durch Ätzen freitragend ausgebildet, so daß diese von der Trägerplatte (1) isoliert sind (Fig. 1).

A-B

Fig. 1

EP 0 377 792 A1

## Sensor zur Bestimmung der Gaskonzentration in einem Gasgemisch durch Messung der Wärmetönung

Die Erfindung betrifft einen Sensor zur Bestimmung der Gaskonzentration in einem Gasgemisch nach dem Oberbegriff des Anspruches 1.

Bekannte Wärmetönungsmeßzellen nutzen die Reaktionswärme bei der Oxidation von brennbaren Gasen, um deren Konzentration in einem Gasgemisch zu bestimmen. Sie bestehen im allgemeinen aus einem Platindraht als elektrisch beheizbarem Element und einer den Draht umgebenden porösen Keramikmasse, welche ein katalytisch aktives Material trägt. Die auf der Oberfläche des auf einige hundert Grad Celsius erwärmten Meßelementes ablaufenden Reaktionen der brennbaren Gaskomponenten mit Sauerstoff führen zur zusätzlichen Erwärmung der Meßzelle. Diese Erwärmung wird z.B. durch die Widerstandsänderung eines Heizdrahtes bestimmt und ist dann ein Maß für die Konzentration der Gaskomponenten (Hengstenberg, Sturm, Winkler, 3. Auflage, Bd. II, S. 113-118).

Angestrebte Eigenschaften bei solchen Meßelementen sind unter anderem große Empfindlichkeit, schnelles Ansprechen auf Änderung der Gaskonzentration und eine große Langzeitstabilität, auch unter Einfluß sogenannter Katalysegifte.

Eine große Empfindlichkeit, d.h. eine große Temperaturerhöhung des Meßelementes, ist zu erreichen, wenn:

1. eine möglichst große Menge an oxidierbaren Gasen an der katalytisch aktiven Oberfläche verbrannt wird,

2. die Masse des Meßelementes möglichst klein ist und

3. die Wärmeableitung durch das Gas und die Halterung bzw. die elektrische Kontaktierung möglichst klein ist.

Bei den gebräuchlichen Wärmetönungsmeßzellen wird deshalb versucht, durch große Porosität des keramischen Trägermaterials des Katalysators ein möglichst großes Verhältnis von Oberfläche zu Masse zu erzielen. Da das Gas zur katalytischen Verbrennung bei solchen Meßstellen in die poröse Keramik eindiffundieren muß, ist der Stoffumsatz bei der Verbrennung meist diffusionsbegrenzt. Dies hat auch zur Folge, daß Änderungen der katalytischen Aktivität, z.B. durch Vergiftung des Katalysators, bis zu einem bestimmten Grad die Messung nicht beeinflussen. Je größer die Porosität des keramischen Trägers ist, desto größer ist allerdings auch die Zeit, die für einen Austausch des Gases in den Poren benötigt wird. Die Ansprechzeit der Meßzellen wird dadurch negativ beeinflußt.

Der Erfindung liegt die Aufgabe zugrunde, einen Sensor zur Messung der Wärmetönung anzugeben, der eine geringe Masse der Meßelemente aufweist und der ohne den porösen Träger für das katalytisch aktive Material auskommt.

Die Aufgabe wird erfindungsgemäß mit den in Anspruch 1 angegebenen Mitteln gelöst. In Anspruch 2 ist eine besonders vorteilhafte Ausführungsform eines Sensors nach Anspruch 1 angegeben.

Der Sensor hat gegenüber den bekannten Wärmetönungsmeßzellen folgende Vorteile:

- bei weiter vergrößertem Verhältnis von Katalysatoroberfläche zur Masse des Sensors ist die Masse der Meßelemente am Sensor extrem verringert. Die thermische Zeitkonstante des Sensors liegt deshalb unter 10 msec. Neben einer kurzen Ansprechzeit des Sensors auf einen Wechsel der Gaskonzentrationen ermöglicht die kleine thermische Zeitkonstante des weiteren eine Modulation der Katalysatortemperatur. Da die Verbrennungsprozesse an der katalytischen Oberfläche für verschiedene Gasarten verschiedene Temperaturabhängigkeiten zeigen, ist mit dem ansonsten nicht selektiven Sensor unter bestimmten Voraussetzungen auch eine Diskriminierung der verschiedenen Gasarten möglich.

- Die Herstellung der Katalysatorschicht mittels Dünnfilmtechnik ermöglicht eine große Variationsbreite der Schichtmaterialien und Eigenschaften bei sehr guter Reproduzierbarkeit.

- Die Verwendung von Silizium als Ausgangsmaterial und der Einsatz der Methoden der Halbleitertechnologie ermöglicht eine kostengünstige Produktion.

Ausgangsmaterial für den Sensor ist eine dünne Scheibe (Wafer) aus einkristallinem Silizium, wie es auch bei der Herstellung von Halbleiterbauelementen eingesetzt wird. Auf diese Siliziumscheiben werden mit den bekannten Methoden der Dünnfilmtechnologie, wie Sputtern, Aufdampfen und CVD, verschiedene funktionelle Schichten aufgebracht und, beispielsweise mit ebenfalls bekannten Methoden der Fotolithographie und Ätztechnik, strukturiert. Ein solches Verfahren ermöglicht die gleichzeitige Herstellung von vielen Sensoren auf einer Siliziumscheibe und damit eine kostengünstige Produktion.

Ein bevorzugtes Ausführungsbeispiel wird anhand der Zeichnung näher erläutert. Es zeigen

Fig. 1 in einem stark vergrößerten Maßstab einen Querschnitt längs der Schnittlinie A-B durch einen Sensor zur Messung der Wärmetönung,

Fig. 2 die Draufsicht auf den gleichen Sensor und

Fig. 3 den Querschnitt durch einen Sensor mit einer Deckplatte.

Fig. 1 zeigt einen Querschnitt längs der Schnittlinie A-B (Fig. 2) durch einen Sensor zur Messung der Wärmetönung durch Verbrennung von oxidierbaren Gasen. Der Sensor besteht aus einer Trägerplatte 1 mit einer beispielhaften Dicke von 250 - 400 μm, wie sie bei Silizium-Wafern für Halbleiterbauelemente üblich ist. Der Sensor hat eine typische Größe von 3 x 3 mm². Auf beide Seiten der Trägerplatte 1 wird zunächst eine isolierende Schicht 2a, 2b aus Siliziumdioxid, Siliziumnitrid, Aluminiumoxid oder einem anderen mit den Verfahren der Dünnfilmtechnik herstellbaren Material aufgebracht. Auf die isolierende Schicht 2a werden durch Aufdampfen oder Sputtern und nachfolgende fotolithographische Methoden mäanderförmige Dünnfilmwiderstände 3, z.B. aus Nickel oder Platin, aufgebracht. Die Dünnfilmwiderstände sind durch Leiterbahnen 4 aus Gold mit den Anschlußflächen 4a, ebenfalls aus Gold, verbunden, an denen der Sensor kontaktiert werden kann. In Fig. 2 bestehen beispielhaft die Meßelemente des Sensors aus zwei ineinander verschlungenen Dünnfilmwiderständen 3a, 3b, die in einer Brückenschaltung eingesetzt werden können. Desweiteren gibt es einen Temperaturmeßwiderstand 7, mit dem die Sensortemperatur außerhalb des geheizten Bereiches gemessen werden kann. Nach dem Aufbringen der Dünnfilmwiderstände werden diese durch eine geeignete Schutzschicht 5 abgedeckt, um sie vor Umgebungseinflüssen zu schützen. Auf dem durch die Dünnfilmwiderstände beheizbaren Bereich ist weiterhin eine Schicht aus einen katalytisch aktiven Material 6 aufgebracht. Es kann sich hierbei um ein reines Metall, wie z.B. Platin, Palladium, Rhodium usw. handeln, um eine metallische Legierung oder aber auch um eine Schicht aus Metalloxiden handeln.

Auf der den Dünnfilmwiderständen gegenüberliegenden Seite der Trägerplatte 1 wird in der isolierenden Schicht 2b durch fotolithographische Methoden ein Fenster geöffnet, so daß das Silizium in diesem Bereich nicht mehr abgedeckt ist. Durch Einsatz eines anisotropen Ätzmittels, wie z.B. Kalilauge, wird dann das Silizium geätzt. Es entsteht eine freitragende Membran aus der isolierenden Schicht 2a, den Dünnfilmwiderständen 3, der passivierenden Schutzschicht 5 und dem Katalysatormaterial 6. Aufgrund der geringen Schichtdicken der Einzelschichten von jeweils einigen 10 bis einigen 100 nm ist die Gesamtdicke der Membran unter 1 μm. Die Masse dieser Membran liegt entsprechend in der Größenordnung von Mikrogramm.

Der dünngeätzte Bereich kann mittels der Dünnfilmwiderstände auf eine Temperatur gebracht werden, bei der die katalytische Oxidation der brennbaren Gase abläuft. Durch die dabei freiwerdende Energie wird die Membran zusätzlich zur elektrischen Beheizung erwärmt. Zur Unterdrückung unerwünschter Einflußgrößen, wie z.B. Umgebungstemperatur und unterschiedliche Wärmeleitfähigkeit der Gase, werden vorzugsweise die Membranwiderstände von zwei Sensoren zu einer elektrischen Brücke verschaltet, wobei einer der Sensoren keine katalytisch aktive Schicht 6 aufweist.

Um, wie bei herkömmlichen Wärmetönungssensoren, einen durch die Gasdiffusion und nicht einen durch die katalytische Umsatzrate der oxidierbaren Gasbestandteile begrenzten Meßeffekt zu erhalten, kann der Sensor nach Fig. 3 zusätzlich mit einer Deckplatte 8 versehen werden, die den Gasaustausch direkt über der Katalysatoroberfläche begrenzt. Ausgangsmaterial für die Deckplatte 8 ist ebenfalls ein Silizium-Wafer mit einer Dicke von 250 - 400 μm, in den mittels Fotolithographie und Ätztechnik eine Grube 9 erzeugt wird, die, wenn die Deckplatte 8, wie in Fig. 3 gezeigt, mit dem Sensor verbunden ist, die Diffusionsstrecke für das Gas bestimmt. Die Deckplatte 8 kann durch Kleben, Löten oder anodisches Bonden mit der Schutzschicht 5 der Dünnfilmwiderstände verbunden werden. Die geometrische Gestaltung der Diffusionsstrecke bestimmt die Gasaustauschzet und die Menge an brennbaren Gasen, die je Zeiteinheit an der Oberfläche des katalytisch aktiven Materials umgesetzt werden kann. Die Öffnung 10 des Diffusionskanals hat eine typische Höhe von 10 bis 300 μm. Länge und Breite sind der Größe der freigeätzten Membran angepaßt.

---

## Ansprüche

1. Sensor zur Bestimmung der Gaskonzentration in einem Gasgemisch durch Messung der Wärmetönung bei der Oxidation brennbarer Gase unter Verwendung von Heiz- und Meßwiderständen und einem Katalysator, dadurch gekennzeichnet, daß die Meß- bzw. Heizwiderstände und der Katalysator gemeinsam auf einer elektrisch und thermisch isolierenden Schicht geringer Wärmekapazität mittels Dünnfilmtechnologie und Fotolithographie aufgebracht sind.

2. Sensor nach Anspruch 1, gekennzeichnet durch die folgenden Konstruktionsmerkmale:
- auf einer Trägerplatte (1) aus Silizium ist die elektrisch und thermisch isolierende Schicht (2a) aufgetragen, auf der durch Aufdampfen oder Sputtern mäanderförmige Dünnfilmwiderstände (3a, 3b) aufgebracht sind, die die Meß- bzw. Heizwiderstände bilden,
- im Bereich der Dünnfilmwiderstände (3a, 3b) ist die isolierende Schicht (2a) freitragend durch anisotropes Ätzen der Trägerplatte (1) ausgebildet, so daß die Dünnfilmwiderstände (3a, 3b) thermisch von der Trägerplatte (1) isoliert sind.
- die Dünnfilmwiderstände (3a, 3b) sind mit einer Schutzschicht (5) abgedeckt, die eine Berührung der Dünnfilmwiderstände mit dem Gasgemisch verhindert und

- auf dem mittels der Dünnfilmwiderstände beheizbaren Bereich der Schutzschicht (5) ist eine Schicht (6) aus katalytisch aktivem Material aufgebracht, welches in thermischen Kontakt mit den heizenden Dünnfilmwiderständen steht und von diesen durch die Schutzschicht (5) elektrisch isoliert ist.

3. Sensor nach Anspruch 1, dadurch gekennzeichnet, daß die isolierende Schicht (2a) aus Siliziumoxid ($SiO_2$) oder aus Siliziumnitrid ($Si_3N_4$) oder aus einer Mischung aus beiden Siliziumverbindungen oder aus einer mehrlagigen Schicht der beiden Siliziumverbindungen besteht.

4. Sensor nach Anspruch 2, dadurch gekennzeichnet, daß auf der Trägerplatte (1) außerhalb des durch die Dünnfilmwiderstände bedeckten Bereiches ein Temperaturmeßwiderstand (7) aufgebracht ist.

5. Sensor nach Anspruch 2, dadurch gekennzeichnet, daß auf der Schutzschicht (5) eine Deckplatte (8) aus Silizium ruht, in die in Höhe der Dünnfilmwiderstände (3a, 3b) eine Grube (9) eingeätzt ist, die den oberen Teil des Sensors bedeckt und die eine Öffnung (10) besitzt, die den Zugang des Gasgemisches zu der katalytisch wirksamen Schicht (6) begrenzt.

Fig. 1

EP 0 377 792 A1

Fig.1

Fig. 2

Fig. 3

<table>
<tr><td colspan="2" style="text-align:center"><b>Europäisches<br>Patentamt</b></td><td style="text-align:center"><b>EUROPÄISCHER RECHERCHENBERICHT</b></td><td>Nummer der Anmeldung<br><br>EP 89 11 7926</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN Band 11, Nr. 236 (P-601)(2683), 4. August 1987; & JP - A - 62 049 251 (YAMATAKE HONEYWELL CO. LTD.) 03.03.1987 --- | 1-5 | G 01 N 27/16 |
| A | GB-A-2 158 586 (GESELLSCHAFT FUER GERAETEBAU MBH) * Seite 2, Zeilen 1-94 * --- | 1,3,4 | |
| A | DE-A-3 028 249 (RICOH CO., LTD.) * ganze Schrift * --- | 1,2 | |
| A,P | DE-A-3 743 398 (SIEMENS AG) * ganze Schrift * ----- | 1-5 | |
| | | | **RECHERCHIERTE SACHGEBIETE (Int. Cl.5)**<br><br>G 01 N |

Der vorliegende Recherchenbericht wurde für alle Patentansprüche erstellt

| Recherchenort | Abschlußdatum der Recherche | Prüfer |
|---|---|---|
| BERLIN | 21-03-1990 | BRISON O.P. |